# EUROPÄISCHE PATENTSCHRIFT

(11) **EP 3 061 178 B1**
(45) Veröffentlichungstag und Bekanntmachung des Hinweises auf die Patenterteilung: **16.05.2018**
(21) Anmeldenummer: 14786611.5
(22) Anmeldetag: 17.10.2014
(51) Int. Cl.: H02K 5/124, H02K 5/15, H02K 5/173, F16C 33/80, F16C 19/06, F16C 33/30, F16C 33/32, F16J 15/447, F16J 15/453, F16C 33/62

(54) **LABYRINTH-DICHTUNG FÜR DREHSTROMMASCHINEN**
LABYRINTH SEAL FOR THREE-PHASE MACHINES
JOINT EN LABYRINTHE POUR MACHINES TRIPHASÉES

(30) Priorität: 22.10.2013 DE 202013009385 U
(43) Veröffentlichungstag der Anmeldung: 31.08.2016
(73) Patentinhaber: Liebherr-Components Biberach GmbH, 88400 Biberach an der Riß (DE)
(72) Erfinder: GRANER, Klaus, 88400 Biberach (DE); LIS, Johann, 88499 Riedlingen (DE); MENDES, Marijo, 89077 Ulm (DE)
(74) Vertreter: Thoma, Michael
(86) Internationale Anmeldenummer: PCT/EP2014/002807
(87) Internationale Veröffentlichungsnummer: WO 2015/058846

(56) Entgegenhaltungen:
- EP-A1- 0 917 274
- WO-A1-2007/034305
- DE-A1- 19 804 208
- DE-U1-202012 000 841
- US-A- 5 925 955
- US-A1- 2003 201 609

## Beschreibung

Die vorliegende Erfindung betrifft elektrische Maschinen mit einer in einem Gehäuse drehbar gelagerten Welle sowie einer Labyrinth-Dichtung mit ineinandergreifenden Labyrinthkonturen zum Abdichten des Gehäuses gegenüber der Welle. Die Druckschrift DE202012000841 U1 ist als nächstliegender Stand der Technik angesehen, die eine fremderregte Synchronmaschine zeigt, bei der zwischen den Kohlebürsten und einem Wellenlager eine Labyrinthdichtung mit elektrisch isolierenden Oberflächen vorgesehen ist, um elektrisch leitende Kriechstrecken zu beseitigen. Weitere elektrische Maschinen sind beispielsweise aus den Schriften DE 198 04 208 A1, WO 2007/034305 A1 und EP 0 917 274 A1 bekannt.
Bei Drehstrommaschinen wie bspw. Synchrongeneratoren, Asynchronmotoren und dergleichen ist es ein bekanntes Problem, dass sich Wellenspannungen bzw. Lagerströme bilden, wobei solche Wellenströme oder Wellenspannungen verschiedene Ursachen haben können, wie bspw. elektrostatische Aufladungen der Generatorwelle, äußere elektrische Felder, die Wellenspannungen bzw. -ströme kapazitiv in die Generatorwelle einkoppeln, oder magnetische Asymmetrien der Wellenumgebung. Die Bildung unkontrollierter Stromkreise kann dabei zur Schädigung von in diesem Stromkreis eingeschlossenen Bauteilen durch Stromeinwirkung und Funkenerosion führen.
Um dieser Problematik entgegenzuwirken, wurden bereits verschiedene Maßnahmen vorgeschlagen. Mit isolierten Lagern bspw. kann, insbesondere bei großen Maschinen und hohen Frequenzen, wegen der relativ dünnen Isolierschicht auf dem Ring des Lagers, deren Dicke üblicherweise im Mikrometer-Bereich liegt, nicht immer der gewünschte Effekt erreicht werden, da kapazitive Ströme aufgrund des Kondensatoreffekts die Lagerisolierung überbrücken können.

Bei Synchronmaschinen werden oft isolierte Lagerschilde bzw. isolierte Lagersitze eingesetzt, wobei durch eine bestimmte Anordnung von Isolierteilen wie Schrauben, Hülsen und dergleichen eine galvanische Trennung des Lageraußenrings gegen das Gehäuse erfolgt, wobei die Welle hier üblicherweise beidseitig mit Gleitdichtungen abgedichtet wird.

Eine Abhilfe können Hybridlager darstellen, bei denen die Laufringe aus Stahl und die Wälzkörper aus Keramik gefertigt werden. Insbesondere bei Verwendung von Kugeln als Wälzkörper ist der Abstand zwischen den Laufringen relativ groß, so dass eine gute Isolierung erreicht werden kann, wobei in diesem Fall üblicherweise die Welle mit Labyrinth-Dichtungen abgedichtet werden kann.

Weitere Maßnahmen zur Reduzierung bzw. Unterbindung von Wellenströmen sind aus den Schriften DE 35 11 755 A1 oder DE 197 42 622 A1 bekannt.

Bei verschmutzen Umgebungsverhältnissen sind die bislang eingesetzten Maßnahmen jedoch bisweilen nicht ausreichend. Insbesondere in Verbindung mit elektrisch leitendem Staub oder auch bei ungünstigen Fertigungstoleranzen kann es zu stromleitenden Brücken im Bereich der Wellendichtungen kommen.

Der vorliegenden Erfindung liegt die Aufgabe zugrunde, eine verbesserte elektrische Maschine sowie eine verbesserte Labyrinth-Dichtung der eingangs genannten Art zu schaffen, die Nachteile des Standes der Technik vermeiden und letzteren in vorteilhafter Weise weiterbilden. Insbesondere sollen Wellenströme im Bereich der Wellendichtung an Drehstrommaschinen, insbesondere Synchrongeneratoren, deren Welle durch isolierte Lager gegen das Gehäuse galvanisch getrennt ist, auch bei Einsatz in verschmutzten Umgebungsverhältnissen sicher unterbunden werden, ohne hierfür komplizierte Strukturen zu schaffen.

Erfindungsgemäß wird die genannte Aufgabe durch eine elektrische Maschine gemäß Anspruch 1 gelöst. Bevorzugte Ausgestaltungen der Erfindung sind Gegenstand der abhängigen Ansprüche.

Es wird also vorgeschlagen, durch eine Isolierung der Labyrinth-Dichtung elektrisch leitende Brücken, die insbesondere im Bereich der Labyrinth-Konturen auftreten können, unschädlich zu machen, so dass sich solche elektrisch leitenden Brücken bspw. durch leitenden Staub zwar weiterhin bilden, jedoch keinen Strom mehr übertragen können bzw. genauer gesagt nicht mehr mit Strom versorgt werden und keinen Strom mehr ableiten können. Erfindungsgemäß ist zumindest eine Seite der Labyrinth-Dichtung zumindest im Bereich der Labyrinthkonturen mit einer isolierenden Beschichtung versehen. Bildet sich durch Verschmutzung eine elektrisch leitende Brücke im Bereich der Labyrinth-Konturen, kann dennoch kein Strom von einem Labyrinth-Dichtungsteil auf den anderen Labyrinth-Dichtungsteil übertragen werden.

In vorteilhafter Weiterbildung der Erfindung können beide Seiten der Labyrinth-Dichtung zumindest im Bereich der Labyrinthkonturen mit einer solchen isolierenden Beschichtung versehen sein. Vorteilhafterweise kann die genannte isolierende Beschichtung dabei nicht nur im Bereich der Labyrinthkonturen aufgebracht sein, sondern sich über die gesamte Oberfläche zumindest der einander zugewandten Seiten der Labyrinth-Dichtungsteile vorgesehen sein.

Eine solche isolierende Beschichtung kann aus einem geeigneten Kunststoff gefertigt sein, mit dem die Labyrinth-Dichtungsteile beschichtet sein können.

In Weiterbildung der Erfindung kann dabei zumindest einer der Labyrinth-Dichtungsteile, der eine der genannten Labyrinth-Konturen aufweist, auch vollständig aus einem isolierenden Werkstoff, insbesondere aus Kunststoff gefertigt sein, so dass nicht nur die Oberfläche des Labyrinth-Dichtungsteils isolierend beschichtet, sondern das Labyrinth-Dichtungsteil auch im Querschnitt bzw. das Vollmaterial isolierend ausgebildet ist. Durch eine solche im Wesentlichen vollständig aus isolierendem Werkstoff bestehende Ausbildung des Labyrinth-Dichtungsteiles kann die gewünschte isolierende Wirkung über einen längeren Zeitraum aufrechterhalten werden, auch wenn an der Oberfläche der Labyrinth-Dichtung bspw. durch Verschmutzung Verschleiß auftritt.
In Weiterbildung der Erfindung können beide Labyrinth-Dichtungshälften jeweils aus einem isolierenden Werkstoff, insbesondere Kunststoff, gefertigt sein.
Die von der genannten Labyrinth-Dichtung gegen das Gehäuse zu dichtende Welle ist an dem genannten Gehäuse durch zumindest ein Hybridwälzlager drehbar gelagert sein, dessen Wälzkörper aus einem anderen Material bestehen als dessen Laufringe. Insbesondere können die Laufringe aus Stahl und die Wälzkörper, bspw. Kugeln, aus Keramik gefertigt sein. Durch die Verwendung eines solchen Hybridwälzlagers kann die Ausbreitung von Wellenströmen auch im Bereich der Wellenlagerung unterbunden werden.
Gemäß der Erfindung ist beidseits des genannten Hybridlagers jeweils eine Labyrinth-Dichtung mit isolierender Beschichtung und aus isolierendem Material vorgesehen.
Die genannte Labyrinth-Dichtung kann bei verschiedenen Drehstrommaschinen in vorteilhafter Weise eingesetzt werden, deren Welle durch isolierte Lager gegen das Gehäuse galvanisch getrennt ist. Insbesondere von Vorteil kann der Einsatz der genannten Labyrinth-Dichtung bei Synchrongeneratoren sein.
Die Erfindung wird nachfolgend anhand eines bevorzugten Ausführungsbeispiels und zugehöriger Zeichnungen näher erläutert. In den Zeichnungen zeigen:

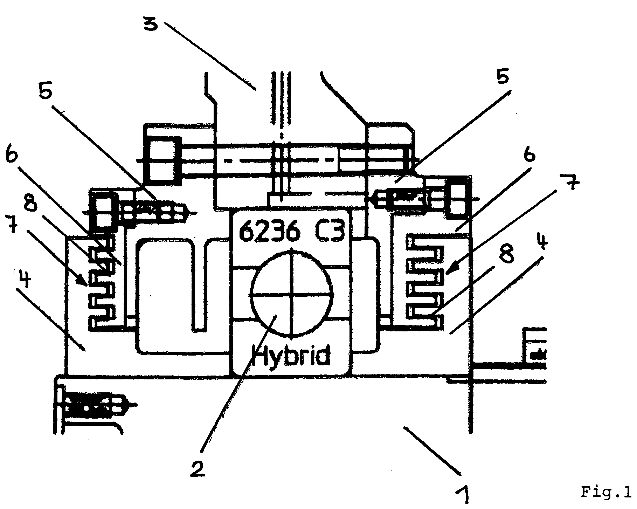

- Fig. 1:: eine ausschnittsweise Darstellung der Lagerung einer Welle einer Drehstrommaschine gegenüber einem Gehäuseteil der Drehstrommaschine, wobei ein die Welle drehbar am Gehäuse abstützendes Wälzlager beidseitig von Labyrinth-Dichtungen eingefasst ist.

Wie Fig. 1 zeigt, kann die Welle (1) der Drehstrommaschine, bspw. einem Synchrongenerator oder einem Asynchronmotor, durch ein Wälzlager (2) bspw. in Form eines Kugellagers an einem Gehäuseteil (3) der Drehstrommaschine drehbar gelagert sein. Vorteilhafterweise kann das genannte Wälzlager (2) als Hybridlager ausgebildet sein, dessen Wälzkörper aus einem anderen Material bestehen als die Laufringe des Wälzlager, wobei die genannten Wälzkörper aus einem elektrisch nicht leitenden Werkstoff, insbesondere Keramik ausgebildet sind. Die Laufringe sind dabei in an sich bekannter Weise aus Stahl gefertig. Um das Gehäuse (3) gegenüber der rotierenden Welle (1) abzudichten, kann auf beiden Seiten des genannten Wälzlagers (2) jeweils eine Labyrinth-Dichtung (7) vorgesehen sein, die jeweils einen rotierenden Labyrinth-Dichtungsteil (4), der auf der Welle (1) befestigt ist und einen nicht rotierenden Labyrinth-Dichtungsteil (5) umfasst, der am Gehäuseteil (3) befestigt ist. Der rotierende Labyrinth-Dichtungsteil (4) kann dabei auf einer Umfangsfläche der Welle (1) sitzen, während der nicht rotierende Labyrinth-Dichtungsteil (5) stirnseitig am Gehäuseteil (3) befestigt, bspw. angeschraubt sein kann.

Die beiden Labyrinth-Dichtungsteile (4) und (5) umfassen jeweils Labyrinthkonturen (8), die ineinandergreifen und einen labyrinthförmigen Spalt zwischen sich definieren. Bspw. können die genannten Labyrinthkonturen (8) ringförmige Nut- und Stegprofile umfassen, die kammartig ineinandergreifen.

Wie Fig. 1 zeigt, kann zumindest einer der Labyrinth-Dichtungsteile (4) und (5) -bspw. der nicht rotierende Labyrinth-Dichtungsteil (5) - mit einem isolierenden Belag (6) versehen sein, der zumindest im Bereich der Labyrinthkontur (8) vorgesehen ist und die genannte Labyrinthkontur (8) bildet. Der genannte isolierende Belag (6) kann bspw. in Form einer ringförmigen Scheibe ausgebildet sein, auf die dem anderen Labyrinth-Dichtungsteil (4) zugewandte Seite des jeweiligen Labyrinth-Dichtungsteils (5) aufgesetzt, bspw. festgeschraubt sein kann.

Alternativ zu der in Fig. 1 gezeigten Ausführung könnte der jeweilige Labyrinth-Dichtungsteil - oder auch jeder der beiden Labyrinth-Dichtungsteile (4) und (5) voll-ständig aus isolierendem Material, bspw. Kunststoff gefertigt sein.

## Patentansprüche

1. Elektrische Maschine mit einer in einem Gehäuse (3) drehbar gelagerten Welle (1) sowie einer Labyrinth-Dichtung (7) mit zumindest zwei Dichtungsteilen (4,5), die ineinandergreifenden Labyrinthkonturen (8) zum Abdichten des Gehäuses (3) gegenüber der Welle (1) aufweisen, wobei zumindest eine Seite der Labyrinth-Dichtung (7) zumindest im Bereich der Labyrinthkonturen (8) mit einer isolierenden Beschichtung (6) versehen ist, **dadurch gekennzeichnet, dass** die Welle (1) an dem Gehäuse (3) durch zumindest ein Hybridwälzlager (2), dessen Wälzkörper aus einem anderen Material bestehen als dessen Laufringe, gelagert ist, wobei die genannten Wälzkörper aus einem elektrisch nicht-leitenden Werkstoff und die Laufringe aus Stahl ausgebildet sind und beidseits des genannten Hybridwälzlagers (2) jeweils eine Labyrinth-Dichtung (7) mit zumindest auf einer Seite der Labyrinthdichtung (7) zumindest im Bereich der Labyrinthkonturen versehener isolierender Beschichtung (6) vorgesehen ist, wobei der nicht rotierende Labyrinth-Dichtungsteil (5) mit einem isolierenden Belag (6) vorgesehen ist, der in Form einer ringförmigen Scheibe ausgebildet ist.

2. Elektrische Maschine nach dem vorhergehnden Anspruch, wobei beide einander gegenüberliegende Seiten der Labyrinth-Dichtung (7) zumindest im Bereich der Labyrinthkontur (8) mit der isolierenden Beschichtung (6) versehen sind.

3. Elektrische Maschine nach einem der vorhergehenden Ansprüche, wobei zumindest einer der Labyrinth-Dichtungsteile (4, 5), der eine der Labyrinthkonturen (8) aufweist, vollständig aus isolierendem Werkstoff, insbesondere aus Kunststoff, gefertigt ist, so dass nicht nur die Oberfläche des Labyrinth-Dichtungsteils (4,5) isolierend beschichtet, sondern das Labyrinth-Dichtungsteil (4,5) auch im Querschnitt bzw. das Vollmaterial isolierend ausgebildet ist.

4. Elektrische Maschine nach einem der vorhergehenden Ansprüche, wobei das Hybridwälzlager (2) Keramikwälzkörper, vorzugsweise -kugeln, und Stahllaufringe aufweist.

5. Elektrische Maschine nach einem der vorhergehenden Ansprüche, wobei sie als Drehstrommaschine, insbesondere Synchrongenerator, deren Welle (1) durch isolierte Lager gegen das Gehäuse (3) galvanisch getrennt ist, ausgebildet ist.

## Claims

1. An electric machine having a shaft (1) rotatably supported in a housing (3) and having a labyrinth seal (7) with at least two seal parts (4, 5) which comprise labyrinth contours (8) which engage into one another for sealing the housing (3) with respect to the shaft (1), wherein at least one side of the labyrinth seal (7) is provided with an insulating coating (6) at least in the region of the labyrinth contours (8), **characterized in that** the shaft (1) is supported at the housing (3) by at least one hybrid rolling bearing (2) whose roller bodies consist of a different material than its races, wherein the said roller bodies are formed of an electrically non-conductive material and the the races are formed of steel, and in each case one labyrinth seal (7) provided with an insulating coating (6) on at least one side of the labyrinth seal (7) at least in the region of the labyrinth contours is provided on both sides of the mentioned hybrid roller bearing (2), wherein the non-rotating labyrinth seal part (5) is provided with an insulating coating (6), which is formed in the type of a ring-shaped disc.

2. An electric machine in accordance with the preceding claim, wherein both mutually oppositely disposed sides of the labyrinth seal (7) are provided with the insulating coating (6) at least in the region of the labyrinth contour (8).

3. An electric machine in accordance with one of the preceding claims, wherein at least one of the labyrinth seal parts (4, 5) which comprises one of the labyrinth contours (8) is completely produced from insulating material, in particular from plastic, such that not only the surface of the labyrinth seal part (4, 5) is coated in an insulating manner, but the labyrinth seal part (4, 5) is formed in an insulating manner also in the cross-section or insulating the solid material, respectively.

4. An electric machine in accordance with the preceding claim, wherein the hybrid rolling bearing (2) comprises ceramic roller bodies, preferably roller balls, and steel races.

5. An electric machine in accordance with one of the preceding claims, wherein it is configured as a three-phase machine, in particular a synchronous generator, whose shaft (1) is galvanically separated with respect to the housing (3) by insulated bearings.

## Revendications

1. Machine électrique avec un arbre (1) monté de manière rotative dans un boîtier (3) et un joint labyrinthe (7) avec deux parties de joint ou plus (4, 5) qui comprend des contours labyrinthe (8) engrenés pour étanchéifier le boîtier (3) par rapport à l'arbre (1), au moins un côté du joint labyrinthe (7) est pourvu dans la région des contours labyrinthe (8) d'un revêtement isolant (6), **caractérisée en ce que** l'arbre (1) est monté sur le boîter (3) par au moins un palier à roulement hybride (2) dont les corps de roulement consistent en un matériau différent de celui de ses bagues de roulement, lesdits corps de roulement étant formés d'un matériau électriquement non-conductive et les bagues de roulement étant formés d'acier et un joint labyrinthe (7) doté avec un revêtement isolant (6) sur au moins un côté du joint labyrinthe (7) au moins dans la région des contours du joint labyrinthe, étant prévu sur deux côtés dudit palier à roulement hybride (2), le corps du joint labyrinthe (5) qui ne tourne pas étant doté d'un revêtement isolant (6) qui est conçu sous forme d'un disque annulaire.

2. Machine électrique selon la revendication précédente, **caractérisée en ce que** les deux côtés opposés l'un par rapport à l'autre du joint labyrinthe (7) sont dotés avec le revêtement isolant (6) au moins dans la région du contour labyrinthe (8).

3. Machine électrique selon l'une quelconque des revendications précédentes, **caractérisée en ce que** au moins un de parties du joint labyrinthe (4, 5) laquelle partie comporte un des contours du labyrinthe (8), est entièrement fabriquée d'un matériau isolant, notamment en plastique, de telle manière que non seulement la surface du corps du joint labyrinthe (4, 5) est recouverte de manière isolante, mais que la partie du joint labyrinthe (4, 5) est conçu de manière isolante, même en coupe transversale et pour insoler matériau plein, respectivement.

4. Machine électrique selon l'une quelconque des revendications précédentes, **caractérisée en ce que** le palier à roulement hybride (2) comprend un corps de roulement en céramique, de préférence des billes, et des bagues de roulement en acier.

5. Machine électrique selon l'une quelconque des revendications précédentes, **caractérisée en ce qu'**elle est conçu comme machine à courant triphasé, en particulier de génératrice synchrone, dont l'arbre (1) est séparé galvaniquement par a boîtier (3) par des paliers isolés.
